# EUROPÄISCHE PATENTANMELDUNG

(11) **EP 4 686 926 A1**
(43) Veröffentlichungstag der Anmeldung: **04.02.2026**
(21) Anmeldenummer: 25180273.2
(22) Anmeldetag: 02.06.2025
(51) Int. Cl.: G01L 1/04, G01L 3/14, G01L 5/16

(54) **VORRICHTUNG ZUR MESSUNG EINER KRAFT UND/ODER EINES DREHMOMENTS**

(30) Priorität: 01.08.2024 DE 102024122003
(71) Anmelder: Neura Robotics GmbH, 72555 Metzingen (DE)
(72) Erfinder: Barrett, Dr., Eamon, 72764 Reutlingen (DE)
(74) Vertreter: Westphal, Mussgnug & Partner Patentanwälte mbB

(57) **Zusammenfassung**

Die Erfindung betrifft eine Vorrichtung (10) zur Messung einer Kraft (F) und/oder eines Drehmoments (M) mit einem Verformungskörper (10), welcher ein erstes Befestigungselement (11), ein in einer Richtung (Z) beabstandet zu dem ersten Befestigungselement (11) angeordnetes zweites Befestigungselement (12) und wenigstens ein zwischen den beiden Befestigungselementen (11, 12) angeordnetes Längenelement (15) mit einem ersten Ende (15a), einem zweiten Ende (15b) und einer Länge (L) entlang einer Längsrichtung (R) umfasst, wobei eine auf den Verformungskörper (10) wirkende Kraft (F) oder ein auf den Verformungskörper (10) wirkendes Drehmoment (M) zu einer Verformung des Längenelements (15) führt, wobei an dem Verformungskörper (10) ein antriebsseitiger Eingang (21) eines mechanischen Verstärkers (20) mittels eines Kopplungselements (30) befestigt ist, wobei an einem abtriebsseitigen Ausgang (22) des mechanischen Verstärkers (20) eine Maßverkörperung (25) angeordnet ist und eine Verformung des Längenelements (15) zu einer Bewegung der Maßverkörperung (25) führt, wobei die Bewegung der Maßverkörperung (25) durch ein Abtastelement (40) erfassbar ist, wobei die Vorrichtung (1) eine Auswerteeinheit (70) umfasst, welche dazu ausgebildet ist, die durch das wenigstens eine Abtastelement (40) detektierten Signale auszuwerten und daraus die zwischen den beiden Befestigungselementen (11, 12) wirkenden Kräfte (F) und/oder Drehmomente (M) zu berechnen.

## Beschreibung

Die Erfindung betrifft eine Vorrichtung zur Messung einer Kraft und/oder eines Drehmoments gemäß dem Oberbegriff des Patentanspruchs 1.

In der Automatisierungstechnik werden vielfach 6-Achs-Kraft-Momentensensoren eingesetzt, um die wirkenden Kräfte und Drehmomente in allen Richtungen bestimmen zu können. Beispielsweise können derartige Sensoren zur Anwendung beim automatischen Fügen oder Montieren von Werkstücken, beim Entgraten, Polieren oder Schleifen, bei Haptikmessungen oder anderen Einsatzgebieten kommen. Diese Sensoren messen die auf sie einwirkenden Kräfte (F bzw. Fx, Fy, Fz) und Drehmomente (M bzw. Mx, My, Mz) in und um drei Koordinaten (x, y, z). Derartige Sensoren sollen einerseits möglichst steif ausgebildet sein, damit sie selbst keine Verformungen durch die Kräfte oder Drehmomente erfahren. Andererseits sollen aber möglichst hohe Auflösungen der gemessenen Signale erreicht werden können, was durch steife Messsysteme, welche aufgrund der Steifigkeit nur kleine Verformungen erfahren, in der Regel nicht möglich ist. Bei den bekannten Sensoren werden zur Bestimmung der Kräfte und Drehmomente beispielsweise Dehnmessstreifen verwendet, mit welchen sehr geringe Materialdehnungen gemessen werden können. Allerdings ist es sehr aufwendig, die Dehnmessstreifen zu applizieren. Zudem benötigen Dehnmessstreifen eine hohe Signalverstärkung, was zu großen Kosten derartiger 6-Achs-Kraft-Momentensensoren führt. Werden Dehnmesstreifen überlastet, muss der gesamte 6-Achs-Kraft-Momentensensoren ausgetauscht werden, was ebenfalls hohe Kosten verursacht.

Die DE 10 2019 135 732 A1 offenbart eine Vorrichtung zur Messung einer Längenänderung mit einem ersten Befestigungselement, einem zweiten Befestigungselement und wenigstens einem zwischen den beiden Befestigungselementen angeordneten Längenelement mit einem ersten Ende, einem zweiten Ende und einer Länge entlang einer Längsrichtung, wobei eine parallel zur Längsrichtung wirkende Kraft zu einer Längenänderung des Längenelements führt, zeichnet sich dadurch aus, dass quer zur Längsrichtung ein Hebelelement mit einem ersten Ende, einem zweiten Ende und einem Drehpunkt angeordnet ist, wobei das Hebelelement einen ersten Hebelarm mit einer ersten Länge zwischen dem Drehpunkt und einem ersten Hebelarmende und einen zweiten Hebelarm mit einer zweiten Länge zwischen dem Drehpunkt und einem zweiten Hebelarmende aufweist, wobei die zweite Länge größer ausgebildet ist als die erste Länge, dass das Längenelement mit seinem ersten Ende verschwenkbar am ersten Hebelarmende des ersten Hebelarms angeordnet ist und wobei das zweite Hebelarmende des zweiten Hebelarms mit einer Maßverkörperung verbunden ist, deren Bewegung durch ein Abtastelement erfassbar ist. Auch diese Vorrichtung weist den Nachteil auf, dass bei Überlast die gesamte Vorrichtung ausgetauscht werden muss.

Die Aufgabe der Erfindung besteht daher darin, eine verbesserte Vorrichtung zur Messung einer Kraft und/oder eines Drehmoments insbesondere zur Anwendung in 6-Achs-Kraft-Momentensensoren bereitzustellen, welche insbesondere in einem Überlastfall nicht vollständig ausgetauscht werden muss.

Die Aufgabe wird erfindungsgemäß gelöst durch eine Vorrichtung zur Messung der einer Kraft und/oder eines Drehmoments mit den Merkmalen des Patentanspruchs 1.

Vorteilhafte Ausgestaltungen und Weiterbildungen der Erfindung sind in den abhängigen Ansprüchen angegeben.

Die erfindungsgemäße Vorrichtung zur Messung einer Kraft und/oder eines Drehmoments mit einem Verformungskörper, welcher ein erstes Befestigungselement, ein in einer Richtung beabstandet zu dem ersten Befestigungselement angeordnetes zweites Befestigungselement und wenigstens ein zwischen den beiden Befestigungselementen angeordnetes Längenelement mit einem ersten Ende, einem zweiten Ende und einer Länge entlang einer Längsrichtung umfasst, wobei eine auf den Verformungskörper wirkende Kraft oder ein auf den Verformungskörper wirkendes Drehmoment zu einer Verformung des Längenelements führt, zeichnet sich dadurch aus, dass an dem Verformungskörper ein antriebsseitiger Eingang eines mechanischen Verstärkers mittels eines Kopplungselements befestigt ist, wobei an einem abtriebsseitigen Ausgang des mechanischen Verstärkers eine Maßverkörperung angeordnet ist und eine Verformung des Längenelements zu einer Bewegung der Maßverkörperung führt, wobei die Bewegung der Maßverkörperung durch ein Abtastelement erfassbar ist, wobei die Vorrichtung eine Auswerteeinheit umfasst, welche dazu ausgebildet ist, die durch das wenigstens eine Abtastelement detektierten Signale auszuwerten und daraus die zwischen den beiden Befestigungselementen wirkenden Kräfte und/oder Drehmomente zu berechnen.

Die Erfindung beruht dabei auf der Idee, dass ein vollständiger Austausch einer durch Überlast beschädigten Vorrichtung vermieden werden kann, wenn der Verformungskörper, welcher die wirkende Kraft oder das wirkende Drehmoment aufnimmt, durch ein Kopplungselement von den Komponenten, welche die Messung der Verformung vornehmen, insbesondere dem mechanischen Verstärker, welcher die Verformung des Verformungskörpers zumindest teilweise aufnimmt und zur Detektion durch ein Abtastelement verstärkt, separiert wird. Es kann damit der Effekt, dass die an der Messung der Verformung beteiligten Komponenten selbst eine Verformung durchlaufen, verringert oder vermieden werden. Durch die Modularisierung der Vorrichtung 1 können Verschleiß und Ausfall von einzelnen Komponenten minimiert werden.

Das Kopplungselement ermöglicht es insbesondere, lediglich einen Teil der auf den Verformungskörper wirkenden Kraft und/oder des auf den Verformungskörper wirkenden Drehmoments insbesondere im Wesentlichen quer zur Richtung abzugreifen und auf den mechanischen Verstärker zu übertragen. Dadurch kann der mechanische Verstärker zuverlässig vor Überlast geschützt werden.

Vorzugsweise ist das Kopplungselement lösbar befestigbar, insbesondere an dem Verformungskörper und/oder an dem mechanischen Verstärker. Eine derartige Ausgestaltung ermöglicht es, im Falle einer Beschädigung des Verformungskörpers durch Überlast den mechanischen Verstärker vom Verformungskörper zu lösen und an einem neuen Verformungskörper zu befestigen, so dass ein Austausch von defekten Komponenten möglich wird und ein vollständiger Austausch der Vorrichtung vermieden werden kann.

Vorteilhafterweise ist das Kopplungselement als eine Schraube, ein verklemmbarer Stift, ein geklebter Stift oder ein Klebemittel ausgebildet. Derartige Kopplungselemente können sich einfach und kostengünstige herstellen, montieren und austauschen lassen.

Gemäß einer besonders bevorzugten Ausführungsform der Erfindung ist der mechanische Verstärker als Festkörpermechanismus ausgebildet. Unter einem Festkörpermechanismus ist ein einzelnes Bauteil zu verstehen, welches an bestimmten Stellen besonders nachgiebig ist, sodass eine Bewegung ausgeführt werden kann, obwohl keine klassischen Gelenke vorhanden sind. Die nachgiebigen Stellen werden dabei als Festkörpergelenke bezeichnet.

Vorzugsweise ist der Festkörpermechanismus einstückig ausgebildet ist und weist wenigstens ein Festkörpergelenk, vorzugsweise mehrere Festkörpergelenke, auf. Die nachgiebigen Stellen können beispielsweise durch Aussparungen in dem Material realisiert werden.

Vorteilhafterweise ist der Festkörpermechanismus aus Metall, vorzugsweise aus Aluminium oder Stahl, gefertigt.

Vorzugsweise sind das erste Befestigungselement scheibenartig oder scheibenringartig mit einer ersten Ebene und das zweite Befestigungselement scheibenartig oder scheibenringartig mit einer zweiten Ebene ausgebildet, wobei die erste Ebene und die zweite Ebene parallel zueinander angeordnet sind. Die scheibenartige Ausbildung der Befestigungselemente ermöglicht eine gute Befestigung an den relativ zueinander zu bewegenden Komponenten, zwischen denen die auftretenden Kräfte und Drehmomente gemessen werden sollen.

Gemäß einer vorteilhaften Ausführungsform der Erfindung ist die Längsrichtung des Längenelements in einem Winkel zwischen 5° und 85°, vorzugsweise in einem Winkel zwischen 10° und 80°, vorzugsweise in einem Winkel von 20° bis 50°, besonders bevorzugt in einem Winkel von etwa 35°, relativ zur Richtung Z angeordnet. Durch ein derartig schräg relativ zu den Befestigungselementen angeordnetes Längenelement kann die Steifigkeit des Verformungskörper erhöht werden, wobei Kräfte und/oder Drehmomente besser aufgenommen werden können als durch ein senkrecht zu den Befestigungselementen angeordnetes Längenelement.

Eine besonders bevorzugte Ausführungsform sieht vor, dass mehrere, insbesondere mindestens sechs, beispielsweise genau sechs, Längenelemente zwischen dem ersten Befestigungselement und dem zweiten Befestigungselement angeordnet sind. Dies ermöglicht eine Bestimmung der zwischen den beiden Befestigungselementen wirkenden Kräfte und Drehmomente in und um drei Achsen und somit die Ausbildung als 6-Achs-Kraft-Momentensensor.

Vorteilhafterweise ist der Verformungskörper drehsymmetrisch mit einem Drehwinkel von 120°. Eine symmetrische Ausgestaltung begünstigt eine hohe Signalqualität der Vorrichtung.

Besonders bevorzugt sind zwei Längenelemente zwischen dem ersten Befestigungselement und dem zweiten Befestigungselement angeordnet sind, wobei jedem Längenelement ein mechanischer Verstärker zugeordnet ist, wobei die insgesamt zwei mechanischen Verstärker durch einen einzigen Festkörpermechanismus realisiert werden, welcher zwei antriebsseitige Eingänge und zwei abtriebsseitige Ausgänge aufweist. Die Zuordnung ist dabei insbesondere durch die räumliche Nähe realisiert. Die Verwendung eines einzigen Festkörpermechanismus, welcher zwei mechanische Verstärker realisiert, kann dabei die Genauigkeit der Vorrichtung erhöhen.

Gemäß einer besonders vorteilhaften Ausgestaltung der Erfindung sind die beiden Längenelemente zu einer Achse, welche insbesondere senkrecht zu den Ebenen der Befestigungselemente angeordnet ist, spiegelsymmetrisch angeordnet, wobei der Festkörpermechanismus, welcher die zwei mechanischen Verstärker für diese beiden Längenelemente umfasst, spiegelsymmetrisch ausgebildet ist. Ein derartig ausgebildeter Festkörpermechanismus ermöglicht, dass sensitive Verschiebungen der abtriebsseitigen Ausgänge möglich sind, aber gleichzeitig nahezu keine parasitären Bewegungen entlang und um weitere Raumachsen entstehen, wodurch Abhängigkeiten zwischen den zu ermittelnden Größen, insbesondere den Kräften und/oder Drehmomenten in den unterschiedlichen Raumrichtungen, entgegengewirkt werden kann.

Besonders bevorzugt bilden die zwei Längenelemente und der eine Festkörpermechanismus eine Gruppe, wobei drei derartige Gruppen zwischen dem ersten Befestigungselement und dem zweiten Befestigungselement angeordnet sind, wobei die drei Gruppen insbesondere jeweils im Winkelabstand von 120° zueinander angeordnet sind. Die Verwendung dreier derartiger Gruppen und damit die Verwendung von sechs Längenelementen und sechs mechanischen Verstärkern ermöglicht die Bestimmung der zwischen den beiden Befestigungselementen wirkenden Kräfte und Drehmomente in und um drei Achsen und somit die Ausbildung als 6-Achs-Kraft-Momentensensor mit möglichst wenig Abhängigkeiten zwischen den zu ermittelnden Größen, insbesondere den Kräften und/oder Drehmomenten in den unterschiedlichen Raumrichtungen. Die symmetrische Ausgestaltung kann einerseits auf einfache Art gefertigt werden, andererseits jedoch auch die Auswertung der ermittelten Signale vereinfachen.

Vorzugsweise sind das Abtastelement und die Auswerteelektronik auf einer Leiterplatte angeordnet, welche in einer Ausnehmung des ersten Befestigungselements insbesondere im Wesentlichen parallel zur Ebene des ersten Befestigungselements angeordnet ist. Eine derartige Anordnung kann einerseits einen kompakten Aufbau ermöglichen. Andererseits kann im Falle einer Überlastung des Verformungskörpers, welche sich beispielsweise in einer irreversiblen Verformung äußert, die Leiterplatte, solange diese nicht in Mitleidenschaft gezogen ist, von dem Verformungskörper entfernt und in einen neuen Verformungskörper eingesetzt werden.

Vorteilhafterweise ist das Abtastelement als optisch, kapazitiv, induktiv oder magnetisch abtastender Sensor ausgebildet. Insbesondere optische Sensoren sind besonders robust und ermöglichen eine Abtastung mit hoher Auflösung.

Vorrichtungen zur Messung einer Kraft und/oder eines Drehmoments, welche auf der Messung einer Verformung oder Längenänderung eines Längenelements beruhen, sind starken Beeinflussungen durch Temperaturänderungen ausgesetzt, beispielsweise, wenn sich das Material des Längenelements bei höherer Temperatur ausdehnt. Vorteilhafterweise weist die Vorrichtung wenigstens einen Temperatursensor, vorzugsweise wenigstens drei Temperatursensoren, besonders bevorzugt sechs oder acht Temperatursensoren, auf, um eine Temperaturänderung bei der Messung der Kraft und/oder des Drehmoments berücksichtigen zu können. Die Verwendung von mehreren Temperatursensoren ermöglicht, wenn diese Temperatursensoren über die Vorrichtung verteilt angeordnet sind, eine genauere Bestimmung der Temperatur, beispielsweise durch Mittelung der mit den mehreren Temperatursensoren gemessenen Temperaturen. Vorzugsweise ist die Auswerteeinheit ausgebildet, eine Korrektur der zwischen den beiden Befestigungselementen wirkenden Kräfte und/oder Drehmomente hinsichtlich der Temperatur durchzuführen.

Die Erfindung wird anhand der nachfolgenden Figuren ausführlich erläutert. Es zeigen
- Fig. 1: eine perspektivische Darstellung eines Ausführungsbeispiels einer erfindungsgemäßen Vorrichtung zur Messung einer Kraft und/oder eines Drehmoments mit einem Gehäuse, einem Verformungskörper, mit drei Festkörpermechanismen und mit eingesetzter Leiterplatte, wobei das Gehäuse abgehoben ist,
- Fig. 2: eine weitere perspektivische Darstellung der Vorrichtung gemäß Fig. 1,
- Fig. 3: eine perspektivische Ansicht des Verformungskörpers der Vorrichtung gemäß Fig. 1,
- Fig. 4: eine Seitenansicht des Verformungskörpers gemäß Fig. 3,
- Fig. 5: eine weitere Seitenansicht des Verformungskörpers gemäß Fig. 3,
- Fig. 6: eine perspektivische Ansicht der Vorrichtung gemäß Fig. 1 ohne Gehäuse und mit zwei seitlich abgenommenen Festkörpermechanismen,
- Fig. 7: eine perspektivische Ansicht der Vorrichtung gemäß Fig. 1 ohne Gehäuse und mit einem seitlich abgenommenen Festkörpermechanismus und einem befestigten Festkörpermechanismus,
- Fig. 8: einen teilweise geschnittene perspektivische Ansicht des Verformungskörpers der Vorrichtung gemäß Fig. 1 mit der Leiterplatte mit Blick von schräg unten auf die Leiterplatte,
- Fig. 9: einen teilweise geschnittene perspektivische Ansicht des Verformungskörpers der Vorrichtung gemäß Fig. 1 mit der Leiterplatte mit Blick von schräg oben auf die Leiterplatte,
- Fig. 10: eine Seitenansicht eines der Festkörpermechanismen der Vorrichtung gemäß Fig. 1 und
- Fig. 11: eine perspektivische Ansicht des Festkörpermechanismus gemäß Fig. 10 mit Blick auf einen abtriebsseitigen Ausgang.

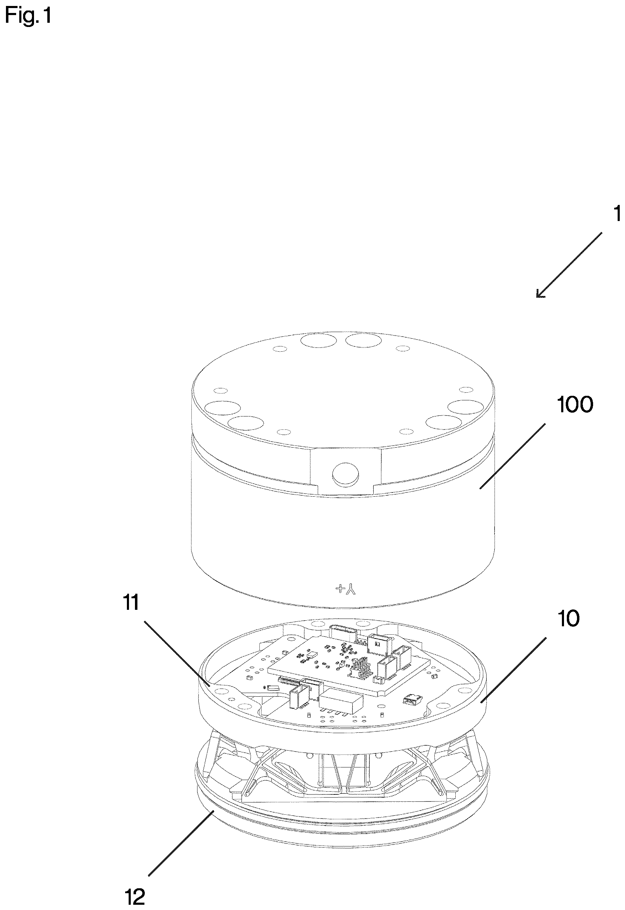

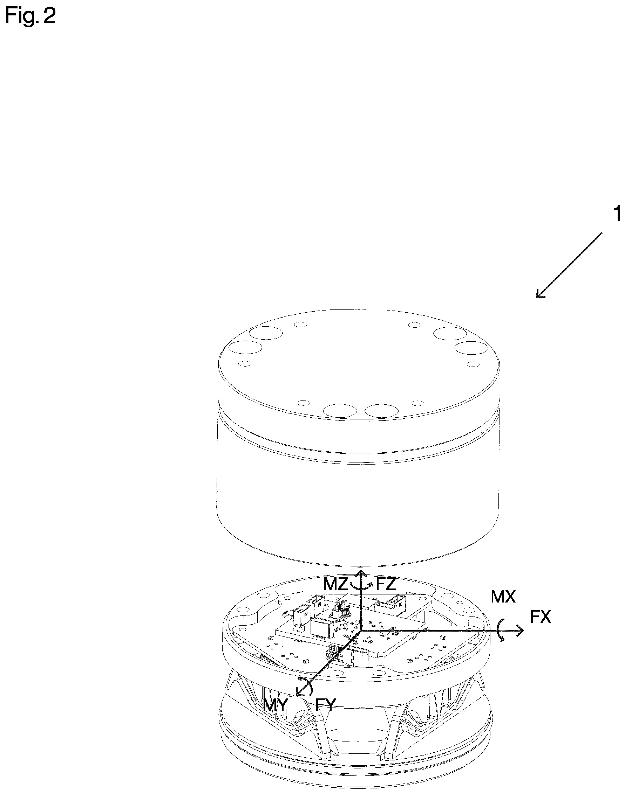

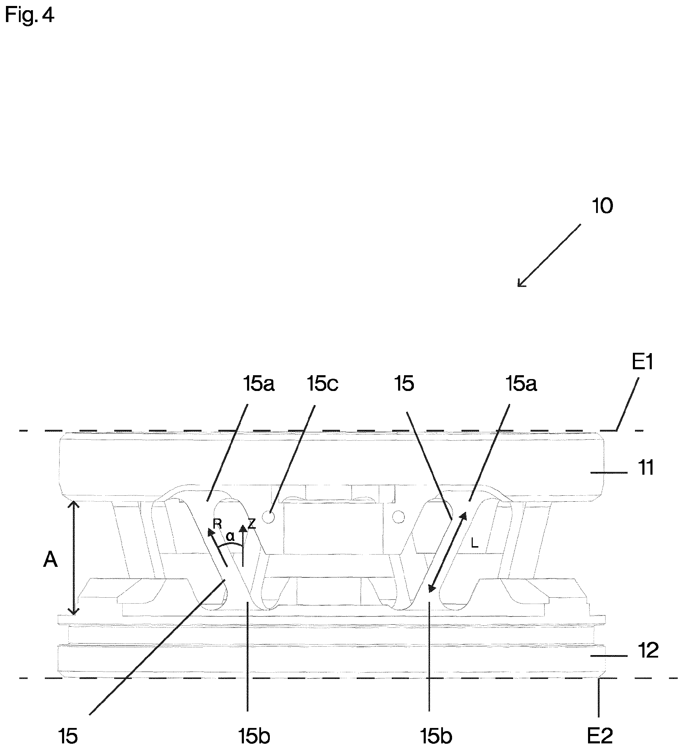

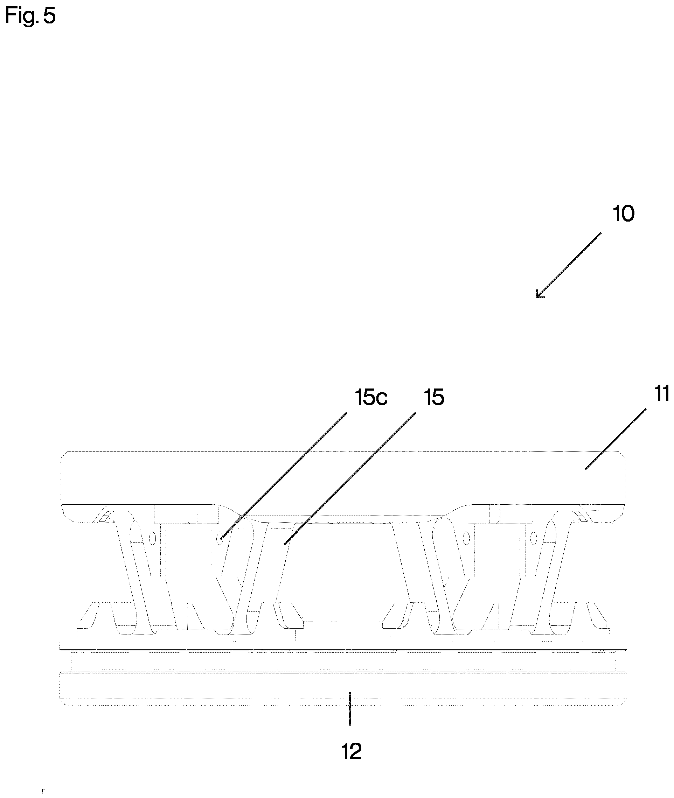

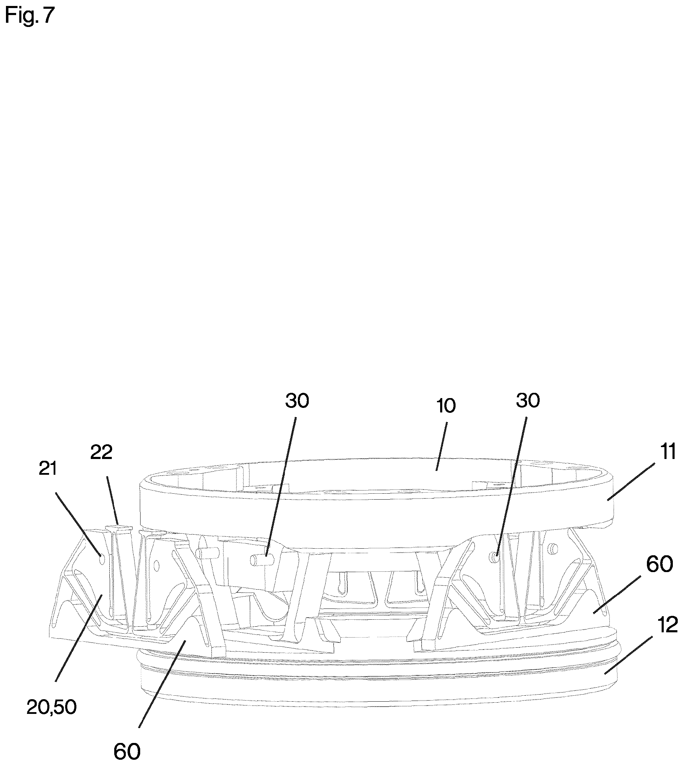

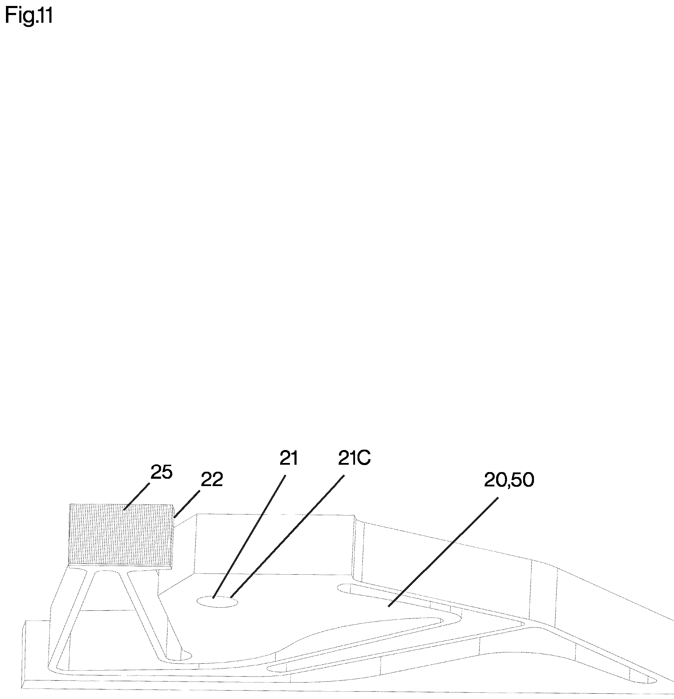

Die Figuren 1 bis 11 zeigen verschiedene Ansichten eines ersten Ausführungsbeispiels einer erfindungsgemäßen Vorrichtung 1 zur Messung einer Kraft F und/oder eines Drehmoments M sowie Komponenten dieser Vorrichtung 1. Gleiche Bezugsziffern bezeichnen gleiche oder funktionsgleiche Teile, wobei zur besseren Übersicht nicht sämtliche Bezugsziffern in sämtlichen Figuren angegeben sind.

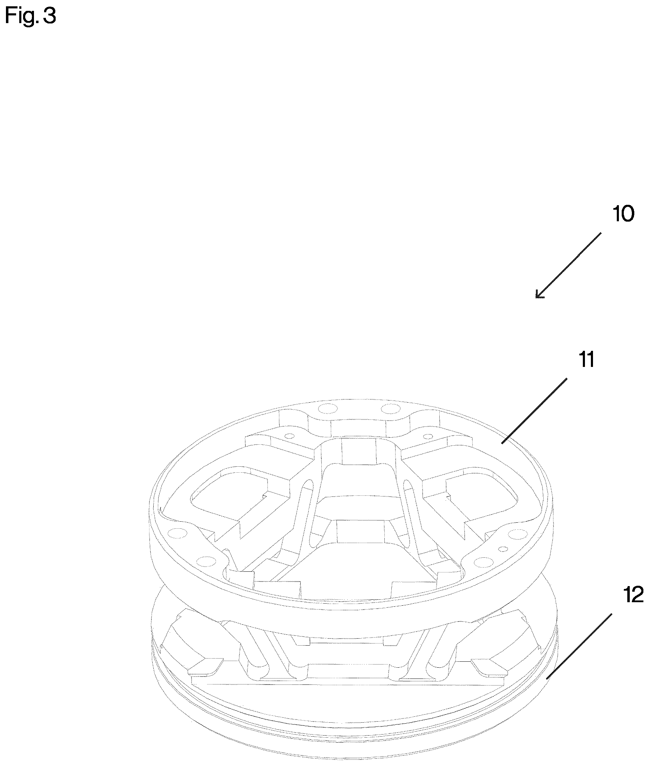

Die Vorrichtung 1 umfasst einen Verformungskörper 10, welches in den Figuren 3 bis 5 separat dargestellt ist. Der Verformungskörper 10 weist ein erstes Befestigungselement 11 und ein in einer Richtung Z in einem Abstand A beabstandet zu dem ersten Befestigungselement 11 angeordnetes zweites Befestigungselement auf. Das erste Befestigungselement 11 kann scheibenartig oder scheibenringartig mit einer ersten Ebene E1 und das zweite Befestigungselement 12 scheibenartig oder scheibenringartig mit einer zweiten Ebene E2 ausgebildet sein, wobei die erste Ebene E1 und die zweite Ebene E2 parallel zueinander angeordnet sind.

Zwischen den beiden Befestigungselementen 11, 12 ist wenigstens ein Längenelement 15 mit einem ersten Ende 15a, einem zweiten Ende 15b und einer Länge L entlang einer Längsrichtung R angeordnet. Das erste Ende 15a ist insbesondere an dem ersten Befestigungselement 11 angeordnet, während das zweite Ende 15b an dem zweiten Befestigungselement 12 angeordnet ist. Jedes Längenelement 15 weist insbesondere seine eigene Längsrichtung R auf. Dies bedeutet insbesondere, dass bei Vorhandensein mehrerer Längenelemente 15 die Längenelemente 15 nicht zwingend sämtlich parallel zueinander ausgerichtet sein müssen. Die Längsrichtung R des Längenelements 15 kann in einem Winkel α zwischen 5° und 85°, vorzugsweise in einem Winkel α zwischen 10° und 80°, vorzugsweise in einem Winkel α von 20° bis 50°, besonders bevorzugt in einem Winkel α von etwa 35°, relativ zur Richtung Z angeordnet sind.

Zwischen dem ersten Befestigungselement 11 und dem zweiten Befestigungselement 12 sind vorzugsweise mehrere, im vorliegenden Ausführungsbeispiel sechs Längenelemente 15 angeordnet.

Der Verformungskörper 10 kann insbesondere drehsymmetrisch mit einem Drehwinkel von 120° ausgebildet sein.

Die Vorrichtung 1 weist wenigstens einen mechanischen Verstärker 20 auf, welcher einen antriebsseitigen Eingang 21 und einen abtriebsseitigen Ausgang 22 aufweist. Der antriebsseitige Eingang 21 ist mittels eines Kopplungselements 30 an dem Verformungskörper 10, vorzugsweise in Nähe zu dem Längenelement 15 oder auch an dem Längenelement 15 selbst, angeordnet, während an dem abtriebsseitigen Ausgang 22 eine Maßverkörperung 25 angeordnet ist.

Das Kopplungselement 30 kann lösbar befestigbar sein, entweder an dem Verformungskörper 10 oder an dem mechanischen Verstärker 20 oder sowohl an dem Verformungskörper 10 als auch an dem mechanischen Verstärker 20. Das Kopplungselement 30 kann als eine Schraube, ein verklemmbarer Stift, ein geklebter Stift oder ein Klebemittel ausgebildet sein. Im vorliegenden Ausführungsbeispiel ist das Kopplungselement 30 als Stift ausgebildet, welcher einenends in eine Bohrung 15c in dem Verformungselement 10, welche insbesondere quer zur Richtung Z des Verformungselements 10 angeordnet ist und beispielsweise an einem axialen Vorsprung 11c des ersten Befestigungselements 11 angeordnet sein kann, und anderenends in eine Bohrung 20c, welche in dem mechanischen Verstärker 20 angeordnet ist und dort insbesondere den antriebsseitigen Eingang 21 bildet, eingesetzt ist. Der Stift kann in den beiden Bohrungen 15c, 20c verklemmt, verklebt oder auch eingeschraubt sein, falls die Bohrungen 15c, 20c ein entsprechendes Innengewinde aufweisen. Der mechanische Verstärker 20 ist insbesondere als Festkörpermechanismus 50 ausgebildet. Der Festkörpermechanismus 50 ist einstückig ausgebildet und weist wenigstens ein Festkörpergelenk, vorzugsweise mehrere Festkörpergelenke, auf. Die Festkörpergelenke können durch entsprechende Aussparungen im Material gebildet sein. Der Festkörpermechanismus 50 ist insbesondere aus Metall, beispielsweise aus Aluminium oder Stahl, gefertigt.

Der antriebsseitige Eingang 21 kann auch bei dem Festkörpermechanismus 50 durch die Bohrung 20c gebildet sein, in welche das Kopplungselement 30 eingreift. Der abtriebsseitige Ausgang 22 weist die Maßverkörperung auf, welche beispielsweise auf einem ebenen tellerartigen Abschnitt angeordnet sein kann. Der Festkörpermechanismus 50 ist dabei insbesondere derart an dem Verformungskörper 10 angeordnet, dass er zwischen dem ersten Befestigungselement 11 und dem zweiten Befestigungselement 12 angeordnet ist, wobei der abtriebsseitige Ausgang 21, insbesondere die Maßverkörperung 25 in Richtung auf das erste Befestigungselement 11 weist.

Wie bereits ausgeführt, können zwischen dem ersten Befestigungselement 11 und dem zweiten Befestigungselement 12 mehrere, im vorliegenden Ausführungsbeispiel sechs, Längenelemente 15 angeordnet sein. Weiterhin können zwischen dem ersten Befestigungselement 11 und dem zweiten Befestigungselement 12 mehrere, im vorliegenden Ausführungsbeispiel sechs, mechanische Verstärker 20 angeordnet sein. Jedem der Längenelemente 15 ist ein mechanischer Verstärker 20 zugeordnet, was insbesondere durch die räumliche Nähe erfolgen kann.

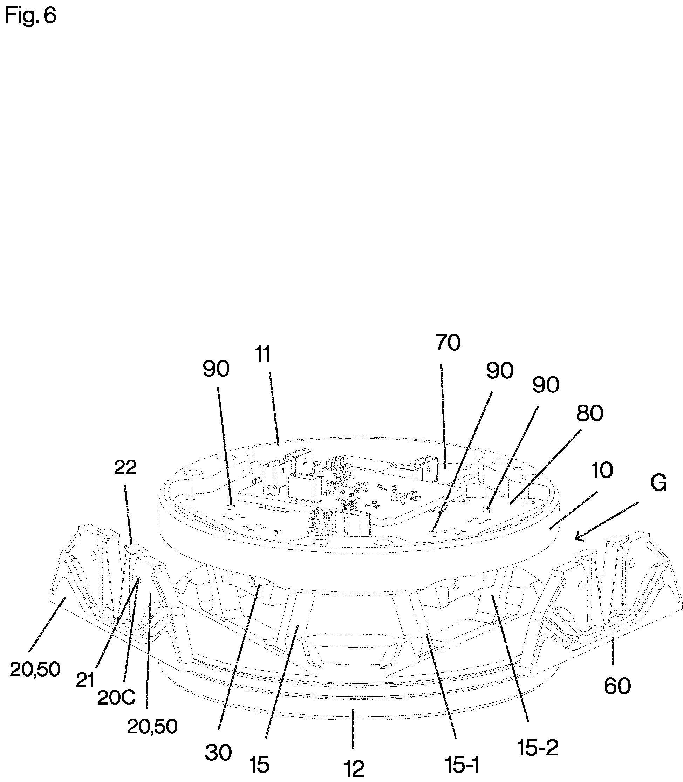

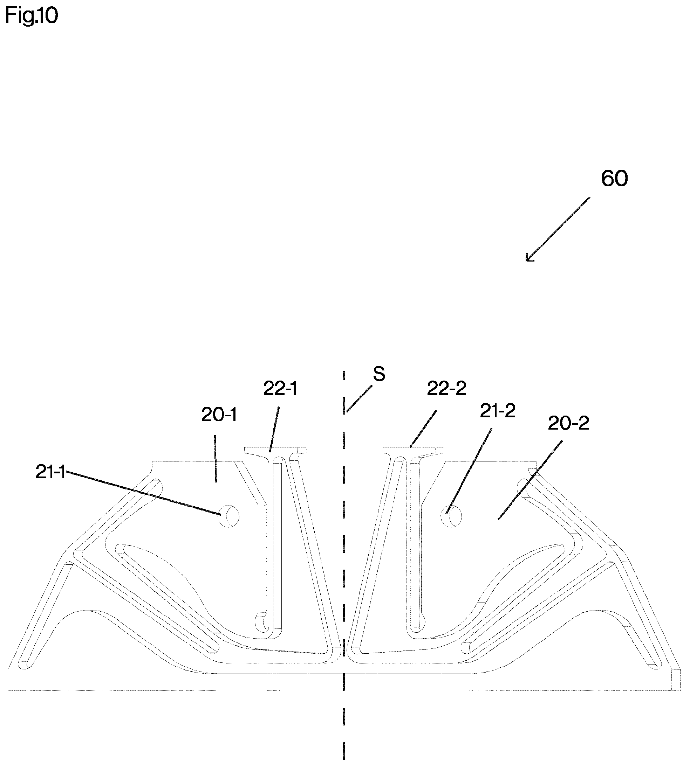

Im vorliegenden Ausführungsbeispiel werden zwei mechanische Verstärker 20, die zu Unterscheidungszwecken in Figur 10 mit 20-1 und 20-2 bezeichnet werden, durch einen einzigen Festkörpermechanismus 60 realisiert, welcher dementsprechend zwei antriebsseitige Eingänge 21-1, 21-2 und zwei abtriebsseitige Ausgänge 22-1, 22-2 aufweist. Der Festkörpermechanismus 60 ist dabei insbesondere spiegelsymmetrisch zu einer Achse S ausgebildet, wobei insbesondere die eine Hälfte den mechanischen Verstärker 20-1 und die andere Hälfte den mechanischen Verstärker 20-2 bildet. Ebenso sind auch die beiden zugehörigen Längenelemente 15, welche zu Illustrationszwecken in Figur 6 mit 15-1 und 15-2 bezeichnet werden, spiegelsymmetrisch zur Achse S, die, wenn der Festkörpermechanismus 60 an dem Verformungskörper 10 befestigt ist, insbesondere senkrecht zu den Ebenen E1 und D2 angeordnet ist, angeordnet. Die beiden Längenelemente 15-1, 15-2 und der Festkörpermechanismus 60, welcher die beiden mechanischen Verstärker 20-1, 20-2 umfasst, bilden eine Gruppe G. Vorzugsweise lassen sich die sechs Längenelemente 15 und die sechs mechanischen Verstärker 20 der Vorrichtung 1 in drei derartige Gruppen G gruppieren, wobei die Gruppen G, insbesondere deren Achse S, jeweils im Winkelabstand 120° zueinander angeordnet sind.

Auch der Verformungskörper 10 einschließlich der drei Festkörpermechanismen 60 ist damit insbesondere drehsymmetrisch mit einem Drehwinkel von 120° ausgebildet.

Die Bewegung der Maßverkörperung 25 ist durch ein Abtastelement 40 erfassbar. Das Abtastelement 40 kann als optisch, kapazitiv, induktiv oder magnetisch abtastender Sensor ausgebildet sein.

Die Vorrichtung 1 umfasst eine Auswerteeinheit 70, welche dazu ausgebildet ist, die durch das wenigstens eine Abtastelement 40 detektierten Signale auszuwerten und daraus die zwischen den beiden Befestigungselementen wirkenden Kräfte F und/oder Drehmomente M zu berechnen. Durch die Verwendung von sechs Längenelementen 15 und sechs mechanischen Verstärkern 20 kann insbesondere einen 6-Achs-Kraft-Momentensensor gebildet werden. Dazu werden der Auswerteeinheit 70 die von sämtlichen sechs Abtastelementen 40 detektierten Signale zugeführt, aus welchen die zwischen den beiden Befestigungselementen 11, 12 wirkenden Kräfte Fx, Fy, Fz und Drehmomente Mx, My, Mz bei entsprechender Kalibrierung berechnet werden können.

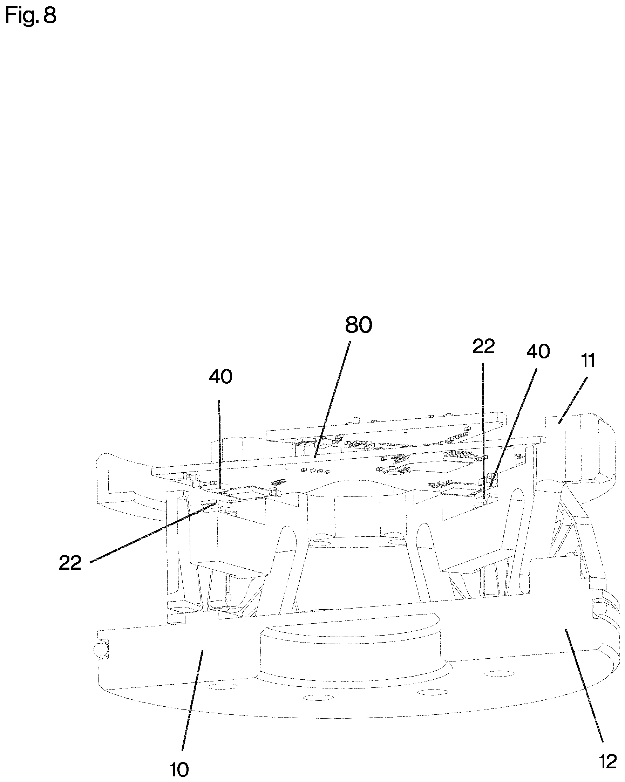

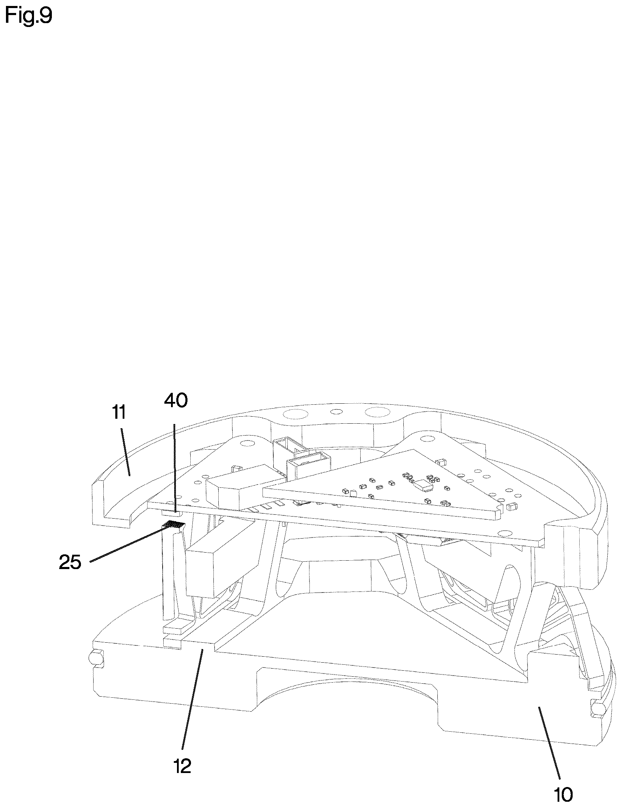

Das Abtastelement 40 und die Auswerteeinheit 70 können auf einer Leiterplatte 80 angeordnet sein, welche in einer Ausnehmung 11a des ersten Befestigungselements 11 insbesondere im Wesentlichen parallel zur Ebene E1 des ersten Befestigungselements 11 angeordnet ist. Dabei ist das Abtastelement 40 insbesondere an der dem zweiten Befestigungselement 12 zugewandten Seite der Leiterplatte 80 angeordnet. Das erste Befestigungselement 11 weist insbesondere einen Durchbruch 11b auf, durch welchen das Abtastelement 40 auf die Maßverkörperung 25 des mechanischen Verstärkers 20 schauen kann (vgl. Fig. 8 und 9). Durch die Anordnung der Leiterplatte 80 in der Ausnehmung 11a des ersten Befestigungselements 11 kann eine geschützte und kompakte Anordnung ermöglicht werden.

Der Verformungskörper 10 kann in ein topfartiges Gehäuse 100 derart eingebracht werden, dass das erste Befestigungselement 11 in dem Gehäuse 100 fixiert ist, während das zweite Befestigungselement 12 eine Öffnung des topfartigen Gehäuses 100 verschließt. Das Gehäuse 100 kann sowohl mechanischen Schutz gegen Beschädigung oder Verschmutzung als auch Schutz gegen Fremdlicheintrag, welcher die Messung des Abtastelements 40 beeinträchtigen könnte, bieten.

Die Vorrichtung 1 kann wenigstens einen Temperatursensor 90, vorzugsweise wenigstens drei Temperatursensoren 90, besonders bevorzugt sechs oder acht Temperatursensoren 90, aufweisen. Die Temperatursensoren 90 sind insbesondere über die Vorrichtung 1 verteilt, vorzugsweise gleichmäßig verteilt angeordnet. Die Auswerteeinheit 70 kann die Temperatursignale der Temperatursensoren 90 abgreifen und auswerten, beispielsweise eine mittlere Temperatur aus alle Temperatursignalen bilden. Vorteilhafterweise ist die Auswerteeinheit 70 ausgebildet, eine Korrektur der zwischen den beiden Befestigungselementen 11, 12 wirkenden Kräfte F und/oder Drehmomente M hinsichtlich der Temperatur durchzuführen.

Eine auf den Verformungskörper 10 wirkende Kraft F oder ein auf den Verformungskörper wirkendes Drehmoment M führt im Rahmen der mechanischen Steifigkeit des Verformungskörpers 10 zu einer elastischen Verformung des Verformungskörpers 10, insbesondere des Längenelements 15 oder der Längenelemente 15. Durch die mechanische Kopplung mittels des Kopplungselements 30 zwischen dem Verformungskörper 10 und den mechanischen Verstärkern 20 oder den Festkörpermechanismen 60 wird an dem antriebsseitigen Eingang 21 der Festkörpermechanismen 60 eine Verschiebung eingeleitet, welche sich unter Berücksichtigung der Struktur des Festkörpermechanismus 60 in eine Verschiebung des abtriebsseitigen Ausgangs 22 übersetzt und damit zu einer Bewegung der Maßverkörperung 25 führt. Dabei greift das Kopplungselement 30 insbesondere lediglich einen Teil der auf den Verformungskörper 10 wirkenden Kraft F und/oder des auf den Verformungskörper 10 wirkenden Drehmoments M insbesondere im Wesentlichen quer zur Richtung Z ab. Der Kraftfluss wird dabei im Wesentlichen durch den Verformungskörper 10 geleitet, woran die Festkörpermechanismen 60 nicht beteiligt sind. Bei einer Überbelastung der Vorrichtung 1 ist somit im Wesentlichen zunächst der Verformungskörper 10 betroffen, alle weiteren Komponenten bleiben so lange intakt, bis eine vollständige Beeinträchtigung der Vorrichtung 1 vorliegt. Die mechanische Steifigkeit des Verformungskörpers 10 kann dabei den generellen Messbereich der Vorrichtung 1 bestimmen, während die Struktur der Festkörpermechanismen 60 die Sensitivität sowie die absoluten Verschiebungen der abtriebsseitigen Ausgänge 22 bestimmen kann, wobei aber parasitäre Bewegungen entlang oder um die weiteren Raumachsen nahezu vermieden werden können.

### Bezugszeichenliste

- 1: Vorrichtung
- 10: Verformungskörper
- 11: erstes Befestigungselement
- 11a: Ausnehmung
- 11b: Durchbruch
- 12: zweites Befestigungselement
- 15: Längenelement
- 15-1: Längenelement
- 15-2: Längenelement
- 15a: erstes Ende
- 15b: zweites Ende
- 15c: Bohrung
- 20: mechanischer Verstärker
- 20-1: mechanischer Verstärker
- 20-2: mechanischer Verstärker
- 20c: Bohrung
- 21: antriebsseitiger Eingang
- 21-1: antriebsseitiger Eingang
- 21-2: antriebsseitiger Eingang
- 22: abtriebsseitiger Ausgang
- 22-1: abtriebsseitiger Ausgang
- 22-2: abtriebsseitiger Ausgang
- 25: Maßverkörperung
- 30: Kopplungselement
- 40: Abtastelement
- 50: Festkörpermechanismus
- 60: Festkörpermechanismus
- 70: Auswerteeinheit
- 80: Leiterplatte
- 90: Temperatursensor
- 100: Gehäuse
- L: Länge
- R: Längsrichtung
- Z: Richtung
- F: Kraft
- M: Drehmoment
- E1: erste Ebene
- E2: zweite Ebene
- A: Abstand
- α: Winkel
- S: Achse
- G: Gruppe

## Patentansprüche

1. Vorrichtung (10) zur Messung einer Kraft (F) und/oder eines Drehmoments (M) mit einem Verformungskörper (10), welcher ein erstes Befestigungselement (11), ein in einer Richtung (Z) beabstandet zu dem ersten Befestigungselement (11) angeordnetes zweites Befestigungselement (12) und wenigstens ein zwischen den beiden Befestigungselementen (11, 12) angeordnetes Längenelement (15) mit einem ersten Ende (15a), einem zweiten Ende (15b) und einer Länge (L) entlang einer Längsrichtung (R) umfasst, wobei eine auf den Verformungskörper (10) wirkende Kraft (F) oder ein auf den Verformungskörper (10) wirkendes Drehmoment (M) zu einer Verformung des Längenelements (15) führt,
**dadurch gekennzeichnet, dass** an dem Verformungskörper (10) ein antriebsseitiger Eingang (21) eines mechanischen Verstärkers (20) mittels eines Kopplungselements (30) befestigt ist, wobei an einem abtriebsseitigen Ausgang (22) des mechanischen Verstärkers (20) eine Maßverkörperung (25) angeordnet ist und eine Verformung des Längenelements (15) zu einer Bewegung der Maßverkörperung (25) führt, wobei die Bewegung der Maßverkörperung (25) durch ein Abtastelement (40) erfassbar ist, wobei die Vorrichtung (1) eine Auswerteeinheit (70) umfasst, welche dazu ausgebildet ist, die durch das wenigstens eine Abtastelement (40) detektierten Signale auszuwerten und daraus die zwischen den beiden Befestigungselementen (11, 12) wirkenden Kräfte (F) und/oder Drehmomente (M) zu berechnen.

2. Vorrichtung nach Anspruch 1,
**dadurch gekennzeichnet, dass** das Kopplungselement (30) lediglich einen Teil der auf den Verformungskörper (10) wirkenden Kraft (F) und/oder des auf den Verformungskörper (10) wirkenden Drehmoments (M) insbesondere im Wesentlichen quer zur Richtung (Z) abgreift.

3. Vorrichtung nach einem der vorhergehenden Ansprüche, **dadurch gekennzeichnet, dass** das Kopplungselement (30) lösbar befestigbar ist.

4. Vorrichtung nach einem der vorhergehenden Ansprüche, **dadurch gekennzeichnet, dass** das Kopplungselement (30) als eine Schraube, ein verklemmbarer Stift, ein geklebter Stift oder ein Klebemittel ausgebildet ist.

5. Vorrichtung nach einem der vorhergehenden Ansprüche, **dadurch gekennzeichnet, dass** der mechanische Verstärker (20) als Festkörpermechanismus (50) ausgebildet ist.

6. Vorrichtung nach Anspruch 5,
**dadurch gekennzeichnet, dass** der Festkörpermechanismus (50) einstückig ausgebildet ist und wenigstens ein Festkörpergelenk, vorzugsweise mehrere Festkörpergelenke, aufweist.

7. Vorrichtung nach einem der Ansprüche 5 bis 6,
**dadurch gekennzeichnet, dass** der Festkörpermechanismus (50) aus Metall, vorzugsweise aus Aluminium oder Stahl, gefertigt ist.

8. Vorrichtung nach einem der vorhergehenden Ansprüche, **dadurch gekennzeichnet, dass** das erste Befestigungselement (11) scheibenartig oder scheibenringartig mit einer ersten Ebene (E1) und das zweite Befestigungselement (12) scheibenartig oder scheibenringartig mit einer zweiten Ebene (E2) ausgebildet sind, wobei die erste Ebene (E1) und die zweite Ebene (E2) parallel zueinander angeordnet sind.

9. Vorrichtung nach einem der vorhergehenden Ansprüche, **dadurch gekennzeichnet, dass** die Längsrichtung (R) des Längenelements (15) in einem Winkel (α) zwischen 5° und 85°, vorzugsweise in einem Winkel (α) zwischen 10° und 80°, vorzugsweise in einem Winkel (α) von 20° bis 50°, besonders bevorzugt in einem Winkel (α) von etwa 35°, relativ zur Richtung (Z) angeordnet sind.

10. Vorrichtung nach einem der vorhergehenden Ansprüche, **dadurch gekennzeichnet, dass** mehrere, insbesondere sechs, Längenelemente (15) zwischen dem ersten Befestigungselement (11) und dem zweiten Befestigungselement (12) angeordnet sind.

11. Vorrichtung nach einem der vorhergehenden Ansprüche, **dadurch gekennzeichnet, dass** zwei Längenelemente (15-1, 15-2) zwischen dem ersten Befestigungselement (11) und dem zweiten Befestigungselement (12) angeordnet sind, wobei jedem Längenelement (15-1, 15-2) ein mechanischer Verstärker (20-1, 20-2) zugeordnet ist, wobei die insgesamt zwei mechanischen Verstärker (20-1, 20-2) durch einen einzigen Festkörpermechanismus (60) realisiert werden, welcher zwei antriebsseitige Eingänge (21-1, 21-2) und zwei abtriebsseitige Ausgänge (22-1, 22-2) aufweist.

12. Vorrichtung nach Anspruch 11,
**dadurch gekennzeichnet, dass** die beiden Längenelemente (15-1, 15-2) zu einer Achse (S), welche insbesondere senkrecht zu den Ebenen (E1, E2) angeordnet ist, spiegelsymmetrisch angeordnet sind und dass der Festkörpermechanismus (60), welcher die zwei mechanischen Verstärker (20-1, 20-2) für diese beiden Längenelemente (15-1, 15-2) umfasst, spiegelsymmetrisch ausgebildet ist.

13. Vorrichtung nach einem der Ansprüche 11 oder 12, **dadurch gekennzeichnet, dass** die zwei Längenelemente (15-1, 15-2) und der eine Festkörpermechanismus (60) eine Gruppe (G) bilden und drei derartige Gruppen (G) zwischen dem ersten Befestigungselement (11) und dem zweiten Befestigungselement (12) angeordnet sind, wobei die drei Gruppen (G) insbesondere jeweils im Winkelabstand von 120° zueinander angeordnet sind.

14. Vorrichtung nach einem der vorhergehenden Ansprüche, **dadurch gekennzeichnet, dass** das Abtastelement (40) und die Auswerteeinheit (70) auf einer Leiterplatte (80) angeordnet sind, welche in einer Ausnehmung (11a) des ersten Befestigungselements (11) insbesondere im Wesentlichen parallel zur Ebene (E1) des ersten Befestigungselements (11) angeordnet ist.

15. Vorrichtung nach einem der vorhergehenden Ansprüche, **dadurch gekennzeichnet, dass** das Abtastelement (40) als optisch, kapazitiv, induktiv oder magnetisch abtastender Sensor ausgebildet ist.

16. Vorrichtung nach einem der vorhergehenden Ansprüche, **dadurch gekennzeichnet, dass** die Vorrichtung (1) wenigstens einen Temperatursensor (90), vorzugsweise wenigstens drei Temperatursensoren (90), besonders bevorzugt sechs oder acht Temperatursensoren (90), aufweist.

17. Vorrichtung nach einem der vorhergehenden Ansprüche, **dadurch gekennzeichnet, dass** die Auswerteeinheit (70) ausgebildet ist, eine Korrektur der zwischen den beiden Befestigungselementen (11, 12) wirkenden Kräfte (F) und/oder Drehmomente (M) hinsichtlich der Temperatur durchzuführen.
